# EUROPEAN PATENT APPLICATION

(11) **EP 3 002 687 A1**
(43) Date of publication of application: **06.04.2016**
(21) Application number: 14854786.2
(22) Date of filing: 25.04.2014
(51) Int. Cl.: G06F 17/30

(54) **METHOD AND DEVICE FOR RECREATING INDEX ONLINE**

(30) Priority: 14.10.2013 CN 201310478786
(71) Applicant: Huawei Technologies Co., Ltd., Longgang District Shenzhen, Guangdong 518129 (CN)
(72) Inventor: LI, Haifeng, Shenzhen Guangdong 518129 (CN)
(74) Representative: Thun, Clemens
(86) International application number: PCT/CN2014/076185
(87) International publication number: WO 2015/054998

(57) **Abstract**

An online index rebuilding method and apparatus are disclosed. The method includes: creating an index snapshot, an index cache, and a target index for a source index, and blocking a write transaction to a base table of a database during a creating process; migrating source index data in the source index to the target index page by page according to a sequence of an index page, and filtering out invalid source index data from the source index by using the index snapshot during a migration process; storing new index data, which is generated during the migration process, in the index cache; and during the migration process, if new index data required by a current index page that is being processed exists in the index cache, migrating both the new index data and the source index data that is in the current index page to the target index; or, after migration of all the source index data is complete, migrating the new index data in the index cache to the target index. According to embodiments of the present invention, random IO operations of a system and system overheads may be reduced.

## Description

This application claims priority to Chinese Patent Application No. 201310478786.3, filed with the Chinese Patent Office on October 14, 2013 and entitled "ONLINE INDEX REBUILDING METHOD AND APPARATUS", which is incorporated herein by reference in its entirety.

### TECHNICAL FIELD

The present invention relates to the field of database technologies, and in particular, to an online index rebuilding method and apparatus.

### BACKGROUND

In a database, an index is a structure for sorting values of one or more columns in a base table of the database. Therefore, using the index can quickly query data in the base table of the database. Generally, most indexes adopt a B-Tree structure. In the B-Tree structure, index data located on an index page is organized in a tree form, and index data at each level is stored according to a sequence. In other words, when index data is inserted into an index page for storage, the index data must be inserted into the index page that meets a sequence requirement, but cannot be inserted into another index page (even though the another index page has enough storage space). If free space of the index page that meets a sequence requirement is insufficient, a new page is further applied for to store the index data.

Because of the foregoing characteristics that an index has, an imbalance of an index tree is possibly resulted when operations of deleting and inserting index data are frequently performed. For example, all index data is discretely distributed on multiple index pages, and only a very small amount of index data exists on each index page. Apparently, an index in this structure not only causes a waste of storage space, but also decreases the index scanning efficiency, thereby further affecting a query speed of a base table of a database.

To solve this problem, most database manufacturers provide an index rebuilding function. However, ordinary index rebuilding is executed offline. Because in an offline index rebuilding manner, a service needs to be interrupted during a rebuilding process, this index rebuilding manner is impractical. Especially for some applications that need to process services all day long, this rebuilding manner is unacceptable. Therefore, current mainstream database manufacturers further provide an online index rebuilding function, that is, a service is not interrupted during a rebuilding process.

An online index rebuilding method is: First, create a target index of a source index (the target index and the source index have a same structure) and an index snapshot of the source index, where during a creating process, a write transaction to a base table is blocked and the blocking is released after the creating is complete; then, migrate source index data in the index snapshot to the target index, and if new index data is generated during a process of migrating the source index data, insert the new index data into both the source index and the target index; and finally, when all the source index data in the source index is migrated to the target index, an online rebuilding process is complete, and the target index can be used subsequently.

However, in the process of implementing the present invention, the inventor of the present invention finds that the prior art has at least the following problems: When the new index data, which is generated during the process of migrating the source index data, is inserted into the target index, the operation of migrating the source index data is interrupted by the operation of inserting the new index data; in addition, more insert operations increase the number of interruptions. For a rebuilding system, random IO operations of the system increases. In addition, the new index data is inserted into the source index, and the insert operation also increases system overheads correspondingly.

### SUMMARY

In order to solve the foregoing technical problems, embodiments of the present invention provide an online index rebuilding method and apparatus, so as to reduce random IO operations of a system and system overheads.

The embodiments of the present invention disclose the following technical solutions:
According to a first aspect of an embodiment of the present invention, an online index rebuilding method is disclosed and includes:
   creating an index snapshot, an index cache, and a target index for a source index, and blocking a write transaction to a base table of a database during a creating process, where the target index and the source index have a same structure;
   migrating source index data in the source index to the target index page by page according to a sequence of an index page, and filtering out invalid source index data from the source index by using the index snapshot during a migration process;
   storing new index data, which is generated during the migration process, in the index cache; and
   during the migration process, if new index data required by a current index page that is being processed exists in the index cache, migrating both the new index data and the source index data that is in the current index page to the target index; or, after migration of all the source index data is complete, migrating the new index data in the index cache to the target index.

With reference to the first aspect of the present invention, the present invention further has a first possibility, that is, the method further includes: when both the new index data and the source index data that is in the current index page are migrated to the target index during the migration process, and after the migration is complete, checking whether new index data not stored in the target index exists in the index cache; and
if the new index data not stored in the target index exists in the index cache, proceeding to migrate the new index data not stored in the target index to the target index.

With reference to the first aspect of the present invention and the first possibility of the first aspect of the present invention, the present invention further has a second possibility, that is, the method further includes:
deleting the index cache after all the new index data in the index cache is stored in the target index.

With reference to the first aspect of the present invention and the first possibility of the first aspect of the present invention, the present invention further has a third possibility, that is, the method further includes:
setting the source index to be in an unavailable state after all the source index data in the source index is migrated to the target index.

With reference to the first aspect of the present invention, the present invention further has a fourth possibility, that is, during an index rebuilding process, index data is queried in the following manner:
during the migration process, querying, in the source index and the index cache, index data that meets a requirement; and
after the migration is complete, querying, in the target index or in the target index and the index cache, the index data that meets a requirement.

With reference to the first aspect of the present invention, the present invention further has a fifth possibility, that is, after the migration of the source index data is complete, the new index data is added in the following manner:
determining whether new index data to be added exists in the index cache and the target index; and if the new index data to be added does not exist in both the index cache and the target index, storing, in the target index, the new index data to be added.

According to a second aspect of an embodiment of the present invention, an online index rebuilding apparatus is disclosed and includes:
a creating unit, configured to create an index snapshot, an index cache, and a target index for a source index, and block a write transaction to a base table of a database during a creating process, where the target index and the source index have a same structure;
a source index data rebuilding unit, configured to migrate source index data in the index snapshot to the target index page by page according to a sequence of an index page, and filter out invalid source index data from the source index by using the index snapshot during a migration process;
a new index data caching unit, configured to store new index data, which is generated during the migration process, in the index cache; and
a new index data rebuilding unit, configured to, during the migration process, if new index data required by a current index page that is being processed exists in the index cache, migrate both the new index data and the source index data that is in the current index page to the target index; or, after migration of all the source index data is complete, migrate the new index data in the index cache to the target index.

With reference to the second aspect of the present invention, the present invention further has a first possibility, that is, the apparatus further includes:
a checking unit, configured to, when both the new index data and the source index data that is in the current index page are migrated to the target index during the migration process, and after the migration is complete, check whether new index data not stored in the target index exists in the index cache; and
a new index data supplementing and rebuilding unit, configured to, if the checking unit detects that the new index data not stored in the target index exists in the index cache, proceed to migrate the new index data not stored in the target index to the target index.

With reference to the second aspect of the present invention and the first possibility of the second aspect of the present invention, the present invention further has a second possibility, that is, the apparatus further includes:
a deleting unit, configured to delete the index cache after all the new index data in the index cache is stored in the target index.

With reference to the second aspect of the present invention and the first possibility of the second aspect of the present invention, the present invention further has a third possibility, that is, the apparatus further includes:
a setting unit, configured to set the source index to be in an unavailable state after all the source index data in the source index is migrated to the target index.

It may be seen from the foregoing embodiments that, compared with the prior art, advantages of the present invention lie in:
New index data, which is generated during a process of migrating source index data between an index snapshot and a target index, is stored in an index cache (but not in a new index and the target index), thereby reducing system overheads brought by storing the new index data in a source index.

For the new index data in the index cache, one manner is: when source index data of a certain index page in the index snapshot is migrated to the target index, if new index data related to the index page exists in the index cache, both the new index data and the source index data that is in the index page are migrated to the target index; and another manner is: after all the source index data in the source index is migrated, the new index data in the index cache is then migrated to the target index, thereby ensuring that an operation of migrating the source index data is interrupted by an operation of inserting the new index data to the target index, and reducing random IO operations of a system.

In addition, during an entire rebuilding process, only one DML transaction needs to be blocked, and blocking time is short.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of an online index rebuilding method according to the present invention;
FIG. 2 is a schematic diagram of storing, in a target index, new index data in an index cache according to the present invention;
FIG. 3 is another schematic diagram of storing, in a target index, new index data in an index cache according to the present invention;
FIG. 4 is a flowchart of another embodiment of an online index rebuilding method according to the present invention;
FIG. 5 is a structural diagram of an embodiment of an online index rebuilding apparatus according to the present invention; and
FIG. 6 is a structural diagram of another embodiment of an online index rebuilding apparatus according to the present invention.

### DESCRIPTION OF EMBODIMENTS

Embodiments of the present invention provide an online index rebuilding method and apparatus. The key of the technical solutions of the present invention lies in that, if new index data is generated during a process of migrating source index data in an index snapshot to a target index, the new index data is first stored in an index cache (but not being stored in a source index or the target index). For the new index data in the index cache, one manner is: when source index data of a certain index page in the index snapshot is migrated to the target index, if new index data related to the index page exists in the index cache, both the new index data and the source index data that is in the index page are migrated to the target index; and another manner is: after all the source index data in the source index is migrated, the new index data in the index cache is then migrated to the target index.

To make the foregoing objectives, characteristics, and advantages of the present invention more comprehensive, the following describes the embodiments of the present invention in detail with reference to the accompanying drawings.

### Embodiment 1

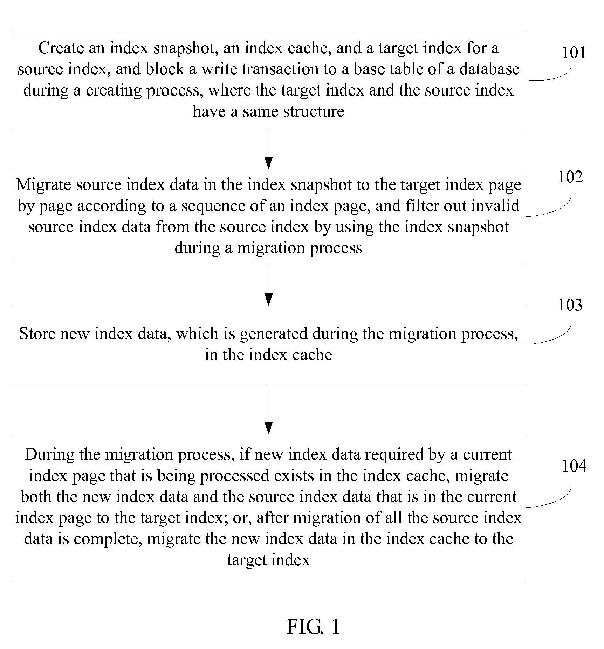

Referring to FIG. 1, FIG. 1 is a flowchart of an embodiment of an online index rebuilding method according to the present invention. The method includes the following steps:
Step 101: Create an index snapshot, an index cache, and a target index for a source index, and block a write transaction to a base table of a database during a creating process, where the target index and the source index have a same structure.

Once a database administrator finds an index tree imbalanced, an online index rebuilding request may be triggered by using a command, and the database performs online rebuilding on a specified index after receiving the request.

Before rebuilding is performed, it may be first checked whether a write transaction based on a base table corresponding to an index exists currently. If a write transaction based on a base table corresponding to an index exists, wait until the write transaction is finished, and then block any write transaction to the base table of the database (a read transaction to the base table of the database is not blocked). The index snapshot, the index cache, and the target index that has a same structure as the source index may be created for the source index. Blocking of a write transaction is released after the creating is complete.

Apparently, by performing the foregoing block operation, it may be ensured that, when a write transaction occurs during a migration process, all new index data generated by the write transaction is stored in the index cache, but not in the source index or the target index. In addition, it may also be ensured that, when the index snapshot filters out invalid source index data from the source index, the source index data that is migrated to the target index after filtering is consistent with the source index data in the source index before index rebuilding, that is, the source index data is identical.

In addition, a created target index is set to be in an unavailable state, that is, query, insert, and delete operations cannot be performed on the target index.

Step 102: Migrate source index data in the index snapshot to the target index page by page according to a sequence of an index page, and filter out invalid source index data from the source index by using the index snapshot during the migration process.

An index page is a basic unit for storing index data, and in the database, disk space allocated to an index file may be logically divided into pages (which are numbered serially from 0 to n). Each page has a fixed size. The source index data in the index snapshot is migrated to the target index one index page by one index page.

Step 103: Store new index data, which is generated during the migration process, in the index cache.

While the source index data in the source index is migrated to the target index, DML transactions to the base table of the database, for example, write transactions, also occur. These write transactions may lead to an operation, for example, an insert operation or a delete operation, on an index, and then new index data is generated. Once the new index data is generated, all the new index data is stored in the index cache.

The index cache is formed by two queues, that are, an added-tuple queue and an original-tuple deleting queue. The added-tuple queue is sorted and stored according to a key value while the original-tuple deleting queue is sorted according to a unique identifier of an original tuple that is deleted, for example, the unique identifier may be used for positioning an identifier of a tuple in the base table of the database.

In addition, when the index cache runs, the following situation also needs to be processed, that is, when space of the index cache is insufficient, a part of tuple space needs to be released to provide storage space for an added tuple. In this case, a manner to be used is: bulk inserting added tuples (and/or deletion identifiers of original tuples) that have been migrated to the target index into the original tuple of the source index, and releasing space occupied by the added tuples (because the source index still needs to provide a query operation, this part of tuples needs to be stored).

Step 104: During the migration process, if new index data required by a current index page that is being processed exists in the index cache, migrate both the new index data and the source index data that is in the current index page to the target index; or, after migration of all the source index data is complete, migrate the new index data in the index cache to the target index.

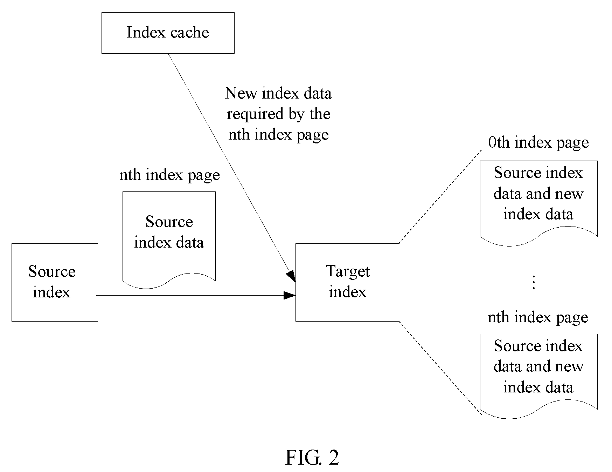

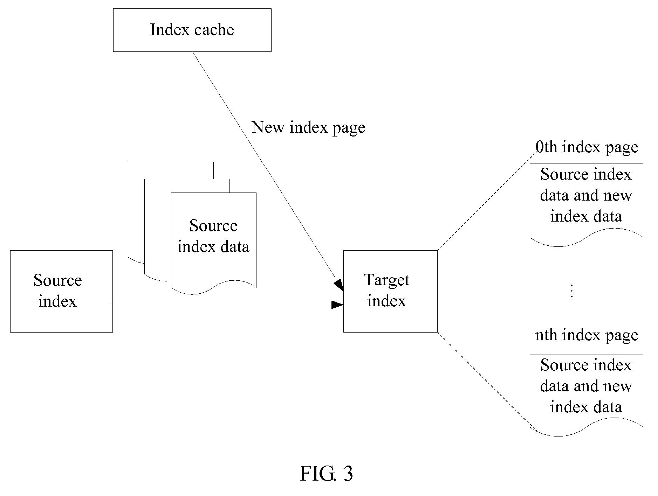

For example, in a first manner, if source index data in the 1st index page (the first index page is an index page that is being processed currently) of the source index is being migrated to the 1 st index page of the target index, it is checked whether new index data required by the 1st index page of the source index exists in the index cache. If the new index data required by the 1st index page of the source index exists in the index cache, both the new index data and the source index data that is on the 1st index page are migrated to the 1st index page of the target index, and so on. An implementation process thereof is shown in FIG. 2. In a second manner, after all the source index data in the source index is migrated to the target index, new index data that is required by the 1st index page of the source index and exists in the index cache is then migrated to the 1st index page of the target index, new index data that is required by the 2nd index page of the source index and exists in the index cache is migrated to the 1st index page of the target, and so on. An implementation process thereof is shown in FIG. 3.

Because the source index data in the index snapshot is arranged sequentially in a unit of tuple, the source index data in the index snapshot only needs to be migrated according to an original sequence of the source index data in the index snapshot when being migrated to the target index. When tuples in the index snapshot are migrated to an index page of the target index one by one, it is checked at the same time whether a tuple with a key value smaller than a key value of a to-be-migrated tuple exists in the index cache. If a tuple with a key value smaller than a key value of a to-be-migrated tuple does not exist in the index cache, the to-be-migrated tuple is inserted into the target index directly; and if a tuple with a key value smaller than a key value of a to-be-migrated tuple exists in the index cache, the tuple in the index cache is first inserted into the target index until a key value of a tuple in the index cache is greater than the key value of the to-be-migrated tuple and the to-be-migrated tuple in the index snapshot is then inserted into the target index.

When the to-be-migrated tuple in the snapshot is inserted into the target index, it is first checked whether the to-be-migrated tuple exits in the original-tuple deleting queue of the index cache. If the to-be-migrated tuple exists in the original-tuple deleting queue of the index cache, a deletion identifier is marked on the to-be-migrated tuple at the time of inserting.

After all the new index data in the index cache is stored in the target index, the index cache may be deleted to release storage space of the system. In addition, in this case, the target index is set to change from the unavailable state to an available state, and during a process of setting the available state of the target index, a DML transaction needs to be blocked temporarily and the blocking may be released after the setting.

In addition, during a process of migrating the source index data in the source index to the target index, all index operations can be performed only on the source index, but not on a new index. However, after all the source index data in the source index is migrated to the target index, the source index is unavailable; and the source index may be deleted, and all index operations can be performed only on the new index.

It may be seen from the foregoing embodiment that, compared with the prior art, advantages of the present invention lie in:
New index data, which is generated during a process of migrating source index data between an index snapshot and a target index, is stored in an index cache (but not in a new index and the target index), thereby reducing system overheads brought by storing the new index data in a source index.

For the new index data in the index cache, one manner is: when source index data of a certain index page in the index snapshot is migrated to the target index, if new index data related to the index page exists in the index cache, both the new index data and the source index data that is in the index page are migrated to the target index; and another manner is: after all the source index data in the source index is migrated, the new index data in the index cache is then migrated to the target index, thereby ensuring that an operation of migrating the source index data is interrupted by an operation of inserting the new index data to the target index, and reducing random IO operations of a system.

In addition, during an entire rebuilding process, only one DML transaction needs to be blocked, and blocking time is short.

### Embodiment 2

In the foregoing step 104, for the first manner, assuming that after new index data that is required by the 1st index page of the source index and exists in the index cache is migrated to the 1st index page of the target index, other new index data required by the 1st index page of the source index is also stored in the index cache, if the new index data is not migrated to the target index, index data is inevitably missing during an online rebuilding process.

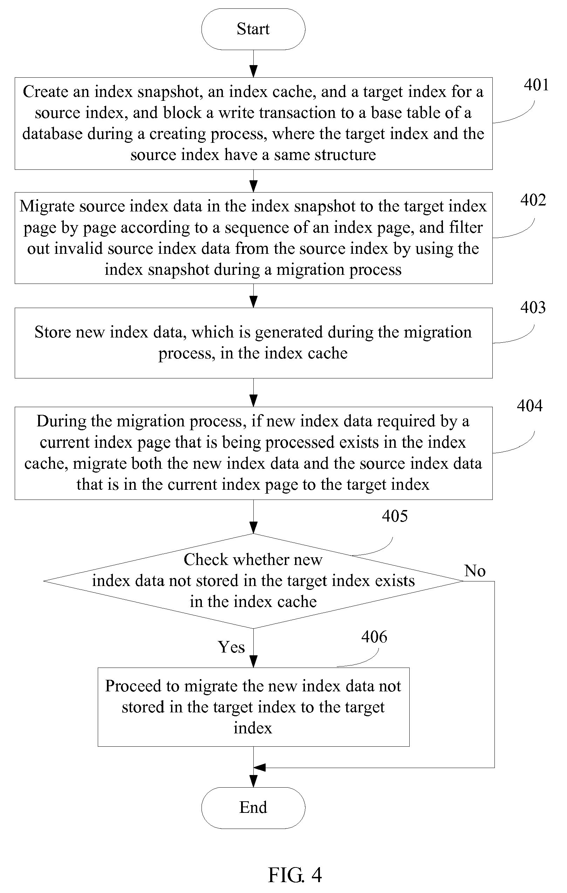

To solve this problem, different from Embodiment 1, in this embodiment, it is further checked whether missing new index data (that is, new index data not stored in the target index) exists in the index cache, and in a case where it is determined that missing new index data exists in the index cache, the missing new index data is supplemented to the target index. Referring to FIG. 4, FIG. 4 is a flowchart of another embodiment of an online index rebuilding method according the present invention. The method includes the following steps:
Step 401: Create an index snapshot, an index cache, and a target index for a source index, and block a write transaction to a base table of a database during a creating process, where the target index and the source index have a same structure.
Step 402: Migrate source index data in the index snapshot to the target index page by page according to a sequence of an index page, and filter out invalid source index data from the source index by using the index snapshot during a migration process.
Step 403: Store new index data, which is generated during the migration process, in the index cache.
Step 404: During the migration process, if new index data required by a current index page that is being processed exists in the index cache, migrate both the new index data and the source index data that is in the current index page to the target index.

For a detailed executing process of the foregoing steps, reference may be made to step 101-104 in Embodiment 1.

Step 405: Check whether new index data not stored in the target index exists in the index cache; if yes, go to step 406; and if not, end the procedure.

Step 406: Proceed to migrate the new index data not stored in the target index to the target index, and then end the procedure.

Herein, it is first checked whether new index data, which is required by the 1st index page of the target index and also not stored in the target index, exists in the index cache. If the new index data, which is required by the 1 st index page of the target index and also not stored in the target index, exists in the index cache, this part of new index data is migrated from the index cache to the target index. Then, it continues to be checked whether new index data, which is required by the 2nd index page of the target index and also not stored in the target index, exists in the index cache. If the new index data, which is required by the 2nd index page of the target index and also not stored in the target index, exists in the index cache, this part of new index data is migrated from the index cache to the target index, and so on.

It may be seen from the foregoing embodiment that, compared with the prior art, advantages of the present invention lie in:
New index data, which is generated during a process of migrating source index data between an index snapshot and a target index, is stored in an index cache (but not in a new index and the target index), thereby reducing system overheads brought by storing the new index data in a source index.

For the new index data in the index cache, one manner is: when source index data of a certain index page in the index snapshot is migrated to the target index, if new index data related to the index page exists in the index cache, both the new index data and the source index data that is in the index page are migrated to the target index; and another manner is: after all the source index data in the source index is migrated, the new index data in the index cache is then migrated to the target index, thereby ensuring that an operation of migrating the source index data is interrupted by an operation of inserting the new index data to the target index, and reducing random IO operations of a system.

In addition, during an entire rebuilding process, only one DML transaction needs to be blocked, and blocking time is short.

An entire index rebuilding process is implemented online, that is, a service is not interrupted while an index is rebuilt, so that the system can still query, insert, and delete an index.

During the process of migrating the source index data in the index snapshot to the target index, query, insert, and delete processing is specifically as follows:
Insert processing: If an index is a unique index, uniqueness verification is performed based on the source index and the index cache; and if the verification is successful, new index data to be inserted is stored in the index cache.

Delete processing: Deletion is performed in the following two cases: in a first case where a to-be-deleted index is in the source index, only a deletion mark of the index needs to be recorded on the index cache; and in a second case where a to-be-deleted index is an index that is newly inserted during a rebuilding process and the index is in the index cache, only a deletion identifier needs to be marked directly in the index cache. Query processing: Index data needs to be obtained both from the source index and the index cache, and if after the index data is obtained from the source index, whether the index data is deleted also needs to be checked from the index cache.

After all the source index data in the index snapshot is migrated to the target index (in this case, the source index is no longer available), query, insert, and delete processing is specifically as follows:
Insert processing: If an index is a unique index, uniqueness verification is performed based on the target index, or the target index and the index cache; and if the verification is successful, new index data to be inserted is stored in the target index.

Delete processing: Deletion is performed in the following two cases: in a first case where a to-be-deleted index is in the target index, only a deletion mark of the index needs to be recorded on the target index; and in a second case where a to-be-deleted index is in the index cache, only a deletion identifier needs to be marked directly in the index cache.

Query processing: Index data needs to be obtained both from the source index and the index cache, and if after the index data is obtained from the source index, whether the index data is deleted also needs to be checked from the index cache.

### Embodiment 3

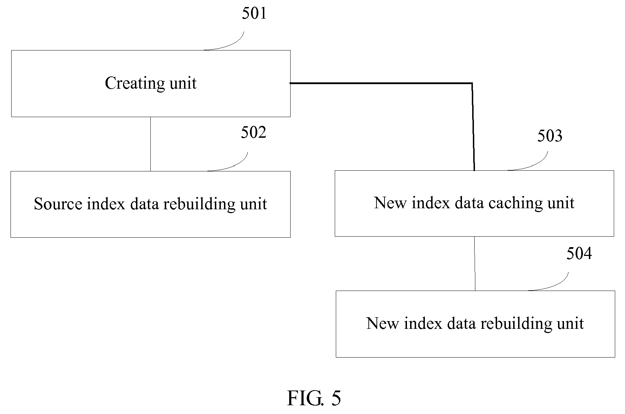

Corresponding to the foregoing online index rebuilding method, an online index rebuilding apparatus is further provided according to an embodiment of the present invention. Referring to FIG. 5, FIG. 5 is a structural diagram of an embodiment of an online index rebuilding apparatus according to the present invention. The apparatus includes: a creating unit 501, a source index data rebuilding unit 502, a new index data caching unit 503, and a new index data rebuilding unit 504. The following further describes an internal structure and an internal connection relationship of the apparatus with reference to a working principle of the apparatus.

The creating unit 501 is configured to create an index snapshot, an index cache, and a target index for a source index, and block a write transaction to a base table of a database during a creating process, where the target index and the source index have a same structure.

The source index data rebuilding unit 502 is configured to migrate source index data in the index snapshot to the target index page by page according to a sequence of an index page, and filter out invalid source index data from the source index by using the index snapshot during a migration process.

The new index data caching unit 503 is configured to store new index data, which is generated during the migration process, in the index cache.

The new index data rebuilding unit 504 is configured to, during the migration process, if new index data required by a current index page that is being processed exists in the index cache, migrate both the new index data and the source index data that is in the current index page to the target index; or, after migration of all the source index data is complete, migrate the new index data in the index cache to the target index.

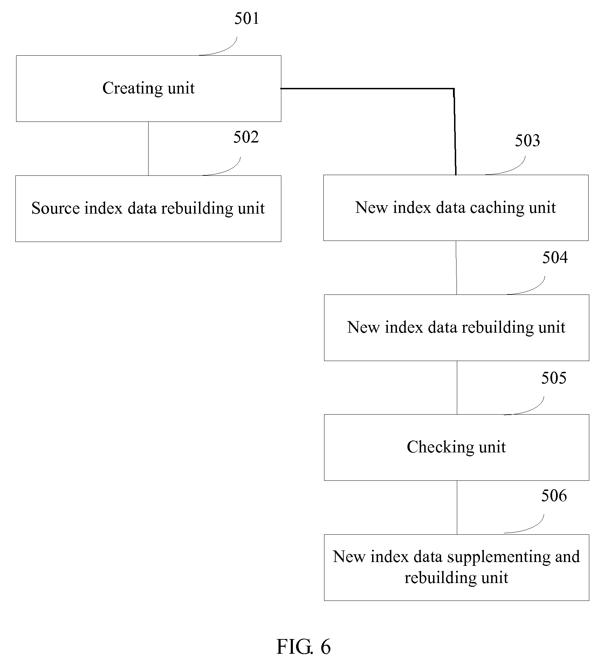

Preferably, as shown in FIG. 6, the apparatus further includes: a checking unit 505 and a new index data supplementing and rebuilding unit 506, where
the checking unit 505 is configured to, when both the new index data and the source index data that is in the current index page are migrated to the target index during the migration process, and after migration of the new index data is complete, check whether new index data not stored in the target index exists in the index cache; and
the new index data supplementing and rebuilding unit 506 is configured to, if the checking unit detects that the new index data not stored in the target index exists in the index cache, proceed to migrate the new index data not stored in the target index to the target index.

Further preferably, the apparatus further includes a deleting unit, configured to delete the index cache after all the new index data in the index cache is stored in the target index.

Alternatively, further preferably, the apparatus further includes a setting unit, configured to set the source index to be in an unavailable state after all the source index data in the source index is migrated to the target index.

It may be seen from the foregoing embodiment that, compared with the prior art, advantages of the present invention lie in:
New index data, which is generated during a process of migrating source index data between an index snapshot and a target index, is stored in an index cache (but not in a new index and the target index), thereby reducing system overheads brought by storing the new index data in a source index.

For the new index data in the index cache, one manner is: when source index data of a certain index page in the index snapshot is migrated to the target index, if new index data related to the index page exists in the index cache, both the new index data and the source index data that is in the index page are migrated to the target index; and another manner is: after all the source index data in the source index is migrated, the new index data in the index cache is then migrated to the target index, thereby ensuring that an operation of migrating the source index data is interrupted by an operation of inserting the new index data to the target index, and reducing random IO operations of a system.

In addition, during an entire rebuilding process, only one DML transaction needs to be blocked, and blocking time is short.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

It should be noted that a person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing described the online index rebuilding method and apparatus provided by the present invention in detail. Although the principle and implementation of the present invention are described with reference to the specific embodiments, the embodiments are only intended to help understand the method and core idea of the present invention. In addition, with respect to the specific implementation manners and application scope of the present invention, modifications and variations may be made by persons of ordinary skill in the art according to the idea of the present invention. Therefore, the specification shall not be construed as a limitation on the present invention.

## Claims

1. An online index rebuilding method, comprising:
creating an index snapshot, an index cache, and a target index for a source index, and blocking a write transaction to a base table of a database during a creating process, wherein the target index and the source index have a same structure;
migrating source index data in the source index to the target index page by page according to a sequence of an index page, and filtering out invalid source index data from the source index by using the index snapshot during a migration process;
storing new index data, which is generated during the migration process, in the index cache; and
during the migration process, if new index data required by a current index page that is being processed exists in the index cache, migrating both the new index data and the source index data that is in the current index page to the target index; or, after migration of all the source index data is complete, migrating the new index data in the index cache to the target index.

2. The method according to claim 1, further comprising:
when both the new index data and the source index data that is in the current index page are migrated to the target index during the migration process, and after the migration is complete, checking whether new index data not stored in the target index exists in the index cache;
if the new index data not stored in the target index exists in the index cache, proceeding to migrate the new index data not stored in the target index to the target index.

3. The method according to claim 1 or 2, further comprising:
deleting the index cache after all the new index data in the index cache is stored in the target index.

4. The method according to claim 1 or 2, further comprising:
setting the source index to be in an unavailable state after all the source index data in the source index is migrated to the target index.

5. The method according to claim 1, wherein, during an index rebuilding process, index data is queried in the following manner:
during the migration process, querying, in the source index and the index cache, index data that meets a requirement; and
after the migration is complete, querying, in the target index or in the target index and the index cache, the index data that meets a requirement.

6. The method according to claim 1, wherein after the migration of the source index data is complete, the new index data is added in the following manner:
determining whether new index data to be added exists in the index cache and the target index; and if the new index data to be added does not exist in both the index cache and the target index, storing, in the target index, the new index data to be added.

7. An online index rebuilding apparatus, comprising:
a creating unit, configured to create an index snapshot, an index cache, and a target index for a source index, and block a write transaction to a base table of a database during a creating process, wherein the target index and the source index have a same structure;
a source index data rebuilding unit, configured to migrate source index data in the index snapshot to the target index page by page according to a sequence of an index page, and filter out invalid source index data from the source index by using the index snapshot during a migration process;
a new index data caching unit, configured to store new index data, which is generated during the migration process, in the index cache; and
a new index data rebuilding unit, configured to, during the migration process, if new index data required by a current index page that is being processed exists in the index cache, migrate both the new index data and the source index data that is in the current index page to the target index; or, after migration of all the source index data is complete, migrate the new index data in the index cache to the target index.

8. The apparatus according to claim 7, further comprising:
a checking unit, configured to, when both the new index data and the source index data that is in the current index page are migrated to the target index during the migration process, and after the migration is complete, check whether new index data not stored in the target index exists in the index cache; and
a new index data supplementing and rebuilding unit, configured to, if the checking unit detects that the new index data not stored in the target index exists in the index cache, proceed to migrate the new index data not stored in the target index to the target index.

9. The apparatus according to claim 7 or 8, further comprising:
a deleting unit, configured to delete the index cache after all the new index data in the index cache is stored in the target index.

10. The apparatus according to claim 7 or 8, further comprising:
a setting unit, configured to set the source index to be in an unavailable state after all the source index data in the source index is migrated to the target index.
